# EUROPEAN PATENT SPECIFICATION

(11) **EP 1 468 902 B1**
(45) Date of publication and mention of the grant of the patent: **27.01.2010**
(21) Application number: 04008809.8
(22) Date of filing: 14.04.2004
(51) Int. Cl.: B62J 15/00

(54) **Clip device for the assembly of a bike fender to a support staff**
Befestigungsvorrichtung für ein Fahrradschutzblech
Dispositif d'attache pour un garde-boue de bicyclette

(30) Priority: 16.04.2003 IT VI20030082
(43) Date of publication of application: 20.10.2004
(73) Proprietor: RPZ S.R.L., 31010 Paderno del Grappa (Treviso) (IT)
(72) Inventor: Passuello, Ivan, 31020 San Zenone Degli Ezzelini,Treviso (IT)
(74) Representative: Bettello, Pietro

(56) References cited:
- EP-A- 0 987 173
- EP-A1- 1 036 731
- EP-A2- 0 934 870
- DE-U1- 20 008 005
- DE-U1- 20 300 726
- DE-U1- 29 704 524

## Description

The present invention refers to a clip device for the assembly of a bike fender to a support staff.

Numerous devices for assembling a bike fender to support staffs are known, the support staffs being normally integral with the bike frame fork or wheel hub.

The European Patent EP 0934870 refers to a device for the fastening of a fender to a support staff or tie rod, comprising a clip provided with two limbs connected in their lower part through a flexible tongue, closed by folding on a portion of the fender.

Once the clip is assembled to the fender, said limbs are maintained in a folded-closed position through a screw fastened into a hole made in the centre of the clip and orthogonal to it.

The clip is characterised by comprising a longitudinal recess in which the support staff is inserted, the terminal portion of the latter coming out of the recess.

Very often, on the pointed end of the terminal portion of the support staff coming out of the clip device, a plastic cap of protective function is inserted.

The longitudinal recess is parallel to the clip's longitudinal axis and is produced in a staggered position with respect to this, passing to the right or left of the closing screw, according to the side of the fender, right or left, on which the device is intended to be assembled.

By consequence, to complete the assembly of the fender to the support staffs, it is necessary to provide clips with recess to the right of the screw, fixable from one side of the fender, and with clips with recess made to the left of the screw, fixable from the other side of the fender.

This presents the drawback of having to produce two types of clips, one with recess to the right, the other with recess to the left of the screw, with consequent increase in production costs.

To avoid this problem, a variation of the device just described is represented by a symmetrical clip contemporaneously comprising two parallel longitudinal recesses, one made to the right of the screw, the other to the left of the screw.

This solution, while allowing lower production costs, nevertheless involves an increase of assembly time and costs such that the operator, even using a single clip form, must place greater attention and lose more time for the correct insertion of the support staff into the longitudinal recess, which will be the recess to the right or left of the screw according to the side of the fender that is being assembled.

Another drawback of both above-described solutions is represented by the fact that the terminal end of the support staff, coming out of the device, may represent a danger for the cyclist in case of accident.

The protective cap which is often inserted for this reason on the point of the support staff has in turn a further drawback tied to the increase of production and assembly costs of the components.

The task of the present invention is to achieve a clip device for the assembly of a bicycle fender to a support staff which overcomes the drawbacks of the known, cited technique.

One object of the finding is to achieve a clip device which may be assembled indiscriminately and unambiguously on the right or left side of the bike fender.

Another object is to achieve a clip device which permits lower assembly and production costs.

Still another object is to achieve a clip device which assures the safety of the cyclist in case of accident.

These objects and others which will become clearer in the following description are attained by a clip device for the assembly of a bike fender to a support staff comprising two limbs connected on their lower part by a hinge and closable one over the other, characterised in that one of said limbs comprises a channel of V shape for the insertion of the terminal end of said support staff into one of the branches of said V-shaped channel.

Appropriately, the clip device is characterised in that it is symmetric with respect to a longitudinal axis.
Advantageously, the clip device is characterised in that said branches of said channel are blind.
Further characteristics and advantages will become clearer from the description of a preferred but not exclusive embodiment of the invention, illustrated as a significant and non-limiting example in the enclosed drawings, in which:
- figure 1 shows a bicycle seen from the side, with a rear fender fastened to a support staff;
- figure 2 is a partial view from the other side of the bicycle of figure 1;
- figure 3 is a plan view of a clip device according to the finding, illustrated with limbs in open position;
- figure 4 is a plan view of the clip device, illustrated with limbs in closed position;
- figure 5 is an elevation side and section view of the clip device, shown with limbs in open position;
- figure 6 is an elevation side and section view of the clip device, shown with limbs in closed position;
- figure 7 is an elevation side view of a portion of fender assembled to the support staff by way of the clip device;
- figure 8 is an enlargement of figure 1, showing in plan view a side of a portion of fender assembled to a first support staff by way of a first clip device;
- figure 9 is an enlargement of figure 2, showing in plan view the other side of the portion of the fender assembled to a second support staff by way of a second clip device.

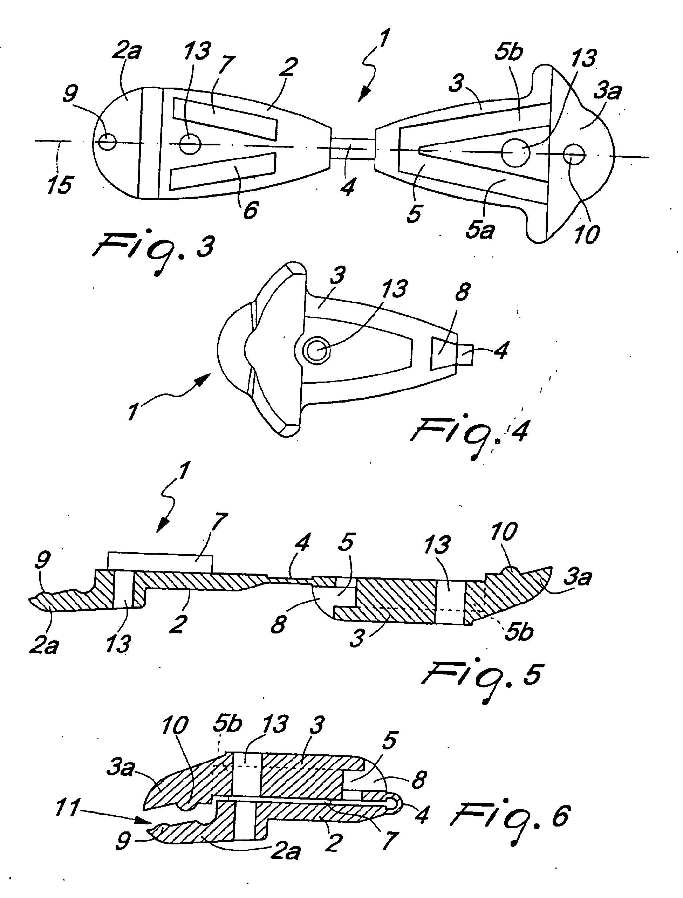

With reference to the cited figures, a clip device, indicated in its entirety by reference number 1, comprises two limbs 2 and 3 which may be closed by folding one over the other.
The upper portions, respectively 2a and 3a, of the limbs 2 and 3 define, when the limbs 2 and 3 are closed one over the other, a slot 11 adapted to receive a portion of a fender 20, as may be seen in figure 6.
The limbs 2 and 3 are closable one over the other in that they are connected on their lower part through a hinge constituted by a flexible tongue 4.
The clip device 1 comprises a V-shaped channel 5 made in the material of one of the limbs, in this case the limb 3.
The device 1 is symmetric with respect to its longitudinal axis 15; in particular, also the V-shaped channel 5 is symmetric with respect to the axis 15, with the vertex of the V positioned coinciding with the axis 15 and the branches 5a and 5b of the V which lead off from the vertex, diverging to the right and left of the axis 15.
The other limb, the limb 2, comprises instead two projecting ribs 6 and 7 which have a shape complementary to that of the two branches 5a and 5b of the V-shaped channel 5.
As may be seen in figure 6, when the limbs 2 and 3 are closed, the ribs 6 and 7 partially penetrate into the branches 5a and 5b of the channel 5, leaving a sufficient space such that the terminal end of a support staff 30 may be inserted, passing through the opening 8, into one of the branches, the 5a or 5b, of the channel 5.

The opening 8 is made in the limb 3 in proximity to the flexible tongue 4, in correspondence with the vertex of the V of the channel 5.

The branches 5a and 5b of the V-shaped channel 5 are blind, such that the support staff 30, once inserted into one of the branches 5a or 5b through the opening 8, may not come out of the clip device 1 with its end terminal.

As may be more precisely seen in figure 6, the upper portion 3a of the limb 3 comprises in addition a protuberance 10, of preferably hemispherical shape, projecting toward the interior of the slot 11.

Still in figure 6 it may be seen that, preferably but not exclusively, the protuberances 9 and 10 are positioned on the upper portions 2a and 3a of the limbs 2 and 3 such that, when the device 1 is in closed position with the upper parts 2a and 3a facing each other, the protuberances 9 and 10 are not aligned with respect to the vertical axis but are staggered.

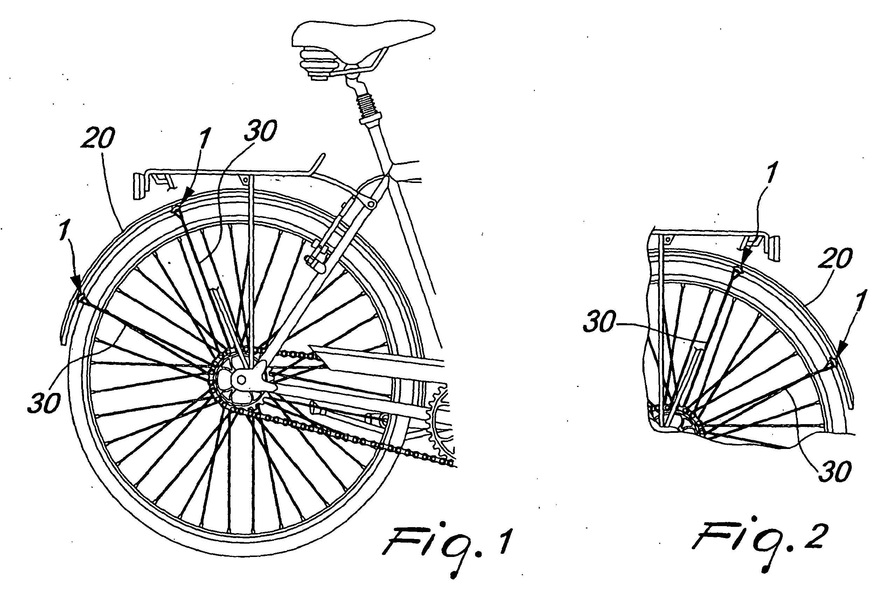

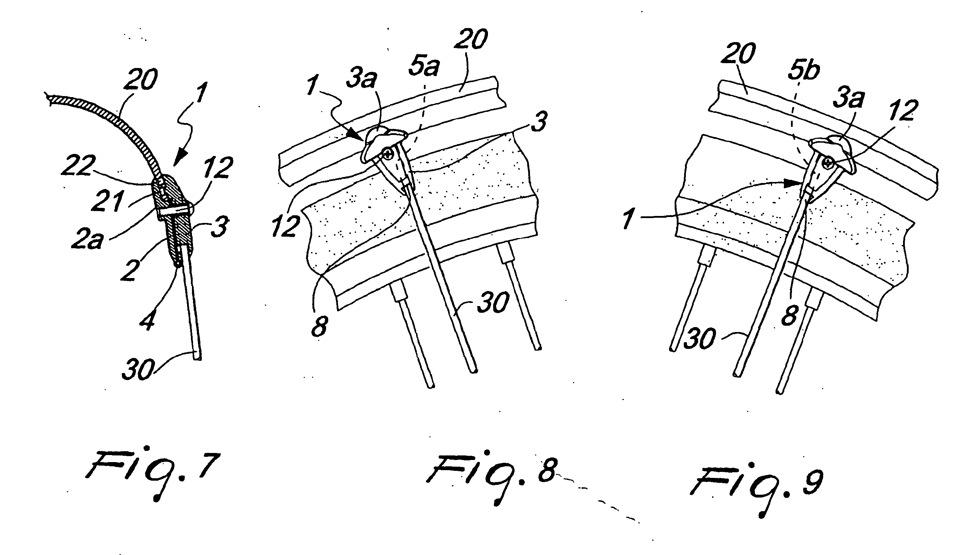

Furthermore, as may be observed in figure 7, when the device 1 is in closed position and fastened to the fender 20, the protuberances 9 and 10 enter two housings, normally two holes, 21 and 22, made in the fender 20. The clip device 1 comprises the means of securing the limbs 2 and 3 one over the other in closed position, consisting of a screw 12 which may be screwed
into a through hole 13 made in the clip device 1 and substantially orthogonal to the axis 15 and to the V-shaped channel 5.
The right and left branches 5a and 5b of the V-shaped channel 5, as illustrated in figure 3, diverge from the axis 15, passing to the right and left of the hole 13.
The clip device 1 is achieved in a material that is capable of being deformed, typically plastic, thereby assuring the safe release of the device 1 from the fender 20 when this last is subject to anomalous stress.
The functioning of the finding is as follows:
The fender 20 of the bicycle is held in position with respect to the bicycle wheel and frame through one or more support staffs 30 (see figures 1 and 2).
The assembly of the fender to each support staff 30 is achieved through a clip device 1.
As may be seen in figure 8, in which an enlarged view of one side of the bicycle is shown, the terminal end of a first support staff 30 is inserted into one of the branches of the V-shaped channel 5, for example the 5a branch to the right of the screw 12, passing through the opening 8.
Figure 9, on the other hand, illustrates an enlarged view from the other side of the bicycle in which it is seen that the terminal end of a second support staff 30 is inserted, passing through the opening 8, into the other branch of the V-shaped channel 5, in this case to the left of the screw 12.
In this manner the symmetry of the structure is assured, using a single clip device shape, and the operations of assembly of the fender to the support staffs prove to be rapid and immediate.
Furthermore, it is not necessary to insert a cap on the point of the support staff 30 since this last does not come out of the clip device 1, the branches of the V-shaped channel 5 being blind.
The assembly of the fender 20 to the support staff 30 is completed by closing the limbs 2 and 3, thereby securing a portion of the fender 20 in the slot 11, with the hemispherical protuberances 8 and 9 inserted in the housings 21 and 22.
The limbs 2 and 3 are secured in closed position by means of the screw 12.
In practice, it has been verified how the invention attains the predetermined task and the objects, having achieved a clip device for the assembly of a bicycle fender to a support staff.

## Claims

1. Clip device (1) for the assembly of a bicycle fender to a support staff comprising two limbs (2, 3) connected on the lower part through a hinge and closable one over the other, one of said limbs comprising a channel (5) of V shape for the insertion of the terminal end of said support staff into one of the branches of said V-shaped channel, the device being **characterised in that** at least one of said upper portions (2a, 3a) of said limbs (2, 3) comprises a projecting protuberance (9, 10) adapted to fit into a corresponding housing (21, 22) defined on said fender portion (20), when said clip device is assembled to said fender portion.

2. Device, according to claim 1, **characterised in that** it is symmetric with respect to a longitudinal axis (15).

3. Device, according to claim 1, **characterised in that** said branches (5a, 5b) of said V-shaped channel are blind.

4. Device, according to one or more of the preceding claims, **characterised in that** when said limbs (2, 3) are closed one over the other, the upper portions (2a, 2b) of said limbs define a slot (11) intended to receive a portion of said fender.

5. Device, according to one or more of the preceding claims, **characterised in that** it comprises the means to secure said limbs, in closed position, one over the other.

6. Device, according to the preceding claim, **characterised in that** said means comprise a screw (12) which may be screwed in a hole (13), passing through said limbs when these last are in closed position, one over the other, said hole (13) being substantially orthogonal to said longitudinal axis (15).

7. Device, according to one or more of the preceding claims, **characterised in that** it is made of pliable material, for example plastic.

## Patentansprüche

1. Befestigungsvorrichtung (1) zum Anbringen eines Fahrrad-Schutzblechs an einer Umfassend zwei Schenkel (2, 3), die am unteren Teil über ein Scharnier verbunden und einer über den anderen verschließbar sind, wobei einer der Schenkel einen V-förmigen Kanal (5) zum Einsetzen des Endstücks der Stützstange in eine der Verzweigungen des V-förmigen Kanals aufweist, wobei die Vorrichtung **dadurch gekennzeichnet ist, dass** wenigstens einer der oberen Abschnitte (2a, 3a) der Schenkel (2, 3) eine vorstehende Ausstülpung (9, 10) aufweist, die so angepasst ist, dass sie in ein entsprechendes, am Schutzblechabschnitt (20) definiertes Gehäuse (21, 22) passt, wenn die Befestigungsvorrichtung an dem Schutzblechabschnitt angebracht ist.

2. Vorrichtung nach Anspruch 1, **dadurch gekennzeichnet, dass** sie in Bezug auf eine Längsachse (15) symmetrisch ist.

3. Vorrichtung nach Anspruch 1, **dadurch gekennzeichnet, dass** die Verzweigungen (5a, 5b) des V-förmigen Kanals blind sind.

4. Vorrichtung nach einem oder mehreren der vorstehenden Ansprüche, **dadurch gekennzeichnet, dass** die oberen Abschnitte (2a, 3a) der Schenkel, wenn die Schenkel übereinander geschlossen sind, einen Schlitz (11) definieren, der dazu bestimmt ist, einen Abschnitt des Schutzblechs aufzunehmen.

5. Vorrichtung nach einem oder mehreren der vorstehenden Ansprüche, **dadurch gekennzeichnet, dass** sie die Mittel zum Befestigen der Schenkel in der geschlossenen Position übereinander umfasst.

6. Vorrichtung nach dem vorstehenden Anspruch, **dadurch gekennzeichnet, dass** die Mittel eine Schraube (12) umfassen, die in ein Loch (13) angeschraubt sein kann und die durch die Schenkel hindurch verläuft, wenn sich diese in der geschlossenen Position übereinander befinden, wobei das Loch (13) im Wesentlichen orthogonal zu der Längsachse (15) verläuft.

7. Vorrichtung nach einem oder mehreren der vor-stehendefi Ansprüche, **dadurch gekennzeichnet, dass** sie aus einem biegsamen Material, z.B. Kunststoff, besteht.

## Revendications

1. Dispositif de fixation (1) d'un ensemble de protection d'un vélo à une barre de support comprenant deux membres (23) reliés à la partie inférieure par le biais d'une charnière et que l'on peut refermer l'un sur l'autre, l'un desdits membres comprenant une rainure (3) en forme de V destinée à l'insertion de l'extrémité terminale de ladite barre de support dans l'une des branches de ladite rainure en forme de V, ce dispositif **se caractérisant en ce qu'**au moins une desdites parties supérieures (2a, 3a) desdites membres (23) comprend une saillie (9, 10) conçue pour se loger dans un boîtier correspondant (21, 22) défini sur ladite partie (20) de protection quant ledit dispositif de fixation est assemblé à ladite partie de protection.

2. Dispositif selon la revendication 1, **caractérisé en ce qu'**il est symétrique par rapport à un axe longitudinal (15).

3. Dispositif selon la revendication 1, **caractérise en ce que** lesdites branches (5a, 5b) de ladite rainure en forme de V sont invisibles.

4. Dispositif selon au moins une des revendications précédentes, **caractérisé en ce que** lesdits membres (2, 3) sont fermés l'un sur l'autre, les parties supérieures (2a, 2b) desdits membres définissant une fente (11) conçue pour recevoir une partie de ladite protection.

5. Dispositif selon au moins une des revendications précédentes, **caractérisé en ce qu'**il comprend des moyens de fixation desdits membres, en position fermés, l'un sur l'autre.

6. Dispositif selon la revendication précédente, **caractérisé en ce que** lesdits moyens comprennent une vis (12) que l'on peut visser dans un trou (13) à travers lesdits membres quand ceux-ci sont en position fermée, l'un sur l'autre, ledit trou (13) étant pratiquement perpendiculaire audit axe longitudinal (15).

7. Dispositif selon au moine une des revendications précédentes, **caractérisé en ce qu'**il est constitué de matériau flexible, en matière plastique par exemple.
